# DEMANDE DE BREVET EUROPEEN

(11) **EP 1 538 581 A1**
(43) Date de publication de la demande: **08.06.2005**
(21) Numéro de dépôt: 04106245.6
(22) Date de dépôt: 02.12.2004
(51) Int. Cl.: G08B 25/08, H04M 11/04

(54) **Procede et dispositif de traitement d'alertes**

(30) Priorité: 04.12.2003 FR 0350966
(71) Demandeur: FRANCE TELECOM, 75015 Paris (FR)
(72) Inventeur: MOURRAIN, Christine, 38000, GRENOBLE (FR); BAUDO, Béatrice, 38190, BERNIN (FR); DEFLIN, Emmanuel, 38000, GRENOBLE (FR); ZANOLIN, Gilles, 38320, EYBENS (FR)
(74) Mandataire: Poulin, Gérard

(57) **Abrégé**

L'invention concerne un procédé de traitement d'un signal par un serveur vocal (30), ce signal provenant d'un appareil appelant, comportant :
- envoi d'une demande vocale de confirmation à l'appareil appelant ou à son utilisateur,
- sur confirmation, ou sur absence de réponse à une demande de confirmation, envoi d'une requête de diffusion d'un message vers une liste de destinataires (50, 52).

## Description

### DOMAINE TECHNIQUE ET ART ANTERIEUR

L'invention concerne un procédé de génération d'alerte et de communication, destiné en particulier à toute personne souhaitant être sécurisée lors de déplacements dans son domicile ou à l'extérieur et souhaitant téléphoner de manière simplifiée.

Le système selon l'invention permet à un utilisateur d'envoyer un message d'alarme avec des moyens téléphoniques de type « en mains-libres ». Par ailleurs l'alerte peut être de type automatique et multi-diffusion.

Actuellement, la sécurisation des personnes se traite de deux façons différentes et distinctes : soit par de la domotique de surveillance à domicile, soit par de la téléalarme volontaire de la personne concernée.

La domotique de surveillance à domicile, par définition, ne traite pas les besoins des personnes hors de leur domicile. Ceci est extrêmement limitatif en terme d'usage, car cela signifie que la personne est en sécurité uniquement à l'intérieur de sa maison.

Les systèmes de téléassistance connus proposent des services de téléalarme où la personne doit appuyer sur un bouton pour déclencher une alarme.

Les services de téléalarme sont déclenchés dès que l'utilisateur appuie sur un bouton. Cela implique deux choses : la personne est consciente et la personne a l'usage de ses mains. Ces services ne sont donc pas utilisables par des personnes handicapées des mains, ou par des personnes désireuses d'utiliser un tel service pour des cas de malaise entraînant l'inconscience. Ceci exclut nombre de situations et de problèmes.

De plus, les systèmes actuels ne font pas d'analyse de situation, afin de traiter une alerte de manière automatique ou volontaire.

Or, si une personne a perdu conscience, elle n'est plus en état de générer elle-même l'alerte, qui doit être déclenchée automatiquement. Si, par contre, la personne détecte une situation anormale, elle peut déclencher l'alerte de manière volontaire.

D'autre part, ces systèmes appellent le, ou les, numéro(s) référencé(s) par l'utilisateur, sans différencier le type d'alerte.

Ainsi, si l'utilisateur a choisi de contacter un personnel de la société de surveillance, ou un urgentiste (pompier, médecin du SAMU,...), ce seront eux qui se déplaceront lors de l'alerte. Cela implique une logistique et des coûts importants, même si la cause de l'alerte ne nécessite pas l'intervention de personnel aussi qualifié.

Prenons l'exemple d'un fauteuil roulant qui se bloque en position rotation : c'est extrêmement inconfortable pour la personne sur le fauteuil et, si son boîtier de commandes n'est plus accessible, elle ne peut se sortir seule de cette situation.

En revanche, cela ne nécessite pas l'intervention d'une équipe de pompiers ou d'un médecin d'un service d'urgence médicale tel que le SAMU.

Inversement, si l'utilisateur a mis des proches dans sa liste et qu'il a une crise cardiaque, le temps que mettront les proches à venir, puis à contacter les secours, peut lui être fatal.

Par ailleurs, si plusieurs personnes sont nommées dans la liste de l'utilisateur, comment sait-on qui doit aller ou qui est allé chez cet utilisateur ?

Enfin, ces approches traitent de l'insécurité, mais jamais des besoins de simplification des communications.

Or les systèmes de gestion de l'alerte s'adressent principalement à des personnes fragilisés et qui peuvent avoir des difficultés à téléphoner.

Il se pose donc le problème de trouver un nouveau mode de mise en alerte lorsqu'une personne se trouve dans une situation handicapante ou de malaise.

Il se pose en outre le problème de trouver un nouveau système qui permette un suivi de l'alerte ou des alertes lancées par un utilisateur.

Il se pose en outre le problème de trouver un nouveau système qui permette une intervention adaptée à différents types de problèmes ou de situations que peut rencontrer une personne handicapée ou malade.

Un autre problème est de pouvoir également fournir des moyens à une personne handicapée ou malade lui permettant d'échanger des informations avec un système d'aide à l'assistance situé à distance.

### EXPOSÉ DE L'INVENTION

L'invention vise à résoudre ces problèmes.

L'invention concerne d'abord un procédé de traitement par un serveur vocal, d'un signal d'appel provenant d'un appareil communiquant, dit appareil appelant, comportant :
- l'envoi d'une demande vocale de confirmation à l'appareil appelant ou à un utilisateur de cet appareil,
- sur confirmation, ou sur absence de réponse à une demande de confirmation, envoi d'une requête de diffusion d'un message, ou diffusion d'un message, vers au moins un destinataire ou vers au moins une liste de destinataires.

L'invention permet d'établir une communication avec une personne appelante, encore appelée utilisateur, et d'adapter la diffusion d'un message d'alarme en fonction du contenu de la réponse de l'utilisateur, en fait en fonction de l'évaluation du caractère plus ou moins grave de la situation rencontrée par celui-ci.

L'invention permet notamment à des personnes, victimes de maladies à risques ou invalidantes, de retrouver une autonomie sociale en étant sécurisée lors de déplacements, tant domestiques qu'à l'extérieur de chez eux et de retrouver une vie sociale riche et en simplifiant les moyens de communication.

Elle permet aussi de réduire les coûts de l'insécurité, en ne déplaçant que les personnes appropriées en cas d'alerte.

Le signal entrant peut être de type vocal ou DTMF ou un flux de données SMS ou http.

La requête envoyée peut être de type http, elle est par exemple envoyée à un serveur de diffusion de messages.

Une étape préalable d'identification du signal entrant dans le serveur vocal permet par exemple d'identifier l'appareil appelant ou la personne appelante, ou l'appareil ou le capteur origine du signal entrant. Un utilisateur peut en effet être muni d'au moins deux capteurs ou appareils de détection d'un phénomène physique, le signal émis vers le serveur vocal contenant alors une information relative au capteur qui en est la source.

Dans le cas où il n'y a ni absence de réponse à une demande de confirmation, ni confirmation, une demande de requête de mise en relation avec un destinataire peut être envoyée à l'appareil appelant ou à son utilisateur.

Dans ce cas l'utilisateur peut donc, même dans des cas ne nécessitant pas l'intervention de quelqu'un, entrer en communication, notamment téléphonique, avec un tiers.

De préférence, après envoi d'une requête de diffusion, le serveur vocal recevra ou ira chercher des informations relatives à la diffusion, et/ou la réception et/ou la lecture, par les destinataires, du message envoyé.

Il pourra alors envoyer à l'appareil appelant ou à son utilisateur, un message vocal, relatif à la diffusion et/ou la réception et/ou à la lecture du message, ce qui contribue à rassurer la personne appelante, et donc à sa sécurité.

Des données peuvent être enregistrées ou mémorisées, pour chaque utilisateur, relatives à des destinataires de messages d'alarme et éventuellement à au moins un message d'alarme ou d'alerte à envoyer.

En fonction de la réponse à la demande vocale de confirmation, une étape de sélection de destinataires parmi les destinataires mémorisés pourra être mise en oeuvre et éventuellement une étape de sélection de message(s) à envoyer.

L'invention concerne également un support de données, pouvant être lu par un système informatique, comportant des données, sous forme codée, pour mettre en oeuvre un procédé tel que décrit ci-dessus, ainsi qu'un produit logiciel comportant un moyen de support de données de programme, susceptible d'être lu par un système informatique, permettant de mettre en oeuvre un procédé tel que décrit ci-dessus.

L'invention concerne également un dispositif de traitement de données, ou un serveur, programmé, ou comportant des moyens, pour mettre en oeuvre un procédé tel que décrit ci-dessus.

Elle concerne notamment un dispositif de traitement d'un signal, dit signal entrant, provenant d'un appareil communiquant, dit appareil appelant, comportant :
- des moyens pour envoyer une demande de confirmation à cet appareil ou à un utilisateur de cet appareil,
- des moyens pour envoyer, sur confirmation, ou sur absence de réponse à une demande de confirmation, une requête de diffusion de message vers une liste de destinataires.

Ce dispositif peut en outre comporter des moyens pour envoyer à l'appareil appelant ou à son utilisateur une demande de requête de mise en relation avec un destinataire, dans le cas où il n'y a ni absence de réponse à une demande de confirmation, ni confirmation.

Des moyens peuvent être prévus pour rechercher ou recevoir, après envoi d'une requête de diffusion, des informations relatives à la diffusion et/ou la réception et/ou la lecture, par les destinataires, du message envoyé.

Des moyens d'identification permettent d'identifier le type de signal reçu par le dispositif ou le type de capteur qui a déclenché l'émission d'un signal appelant, et/ou l'appareil ou l'utilisateur de cet appareil qui a émis le signal.

Le dispositif peut permettre, après envoi d'une requête de diffusion, l'envoi, à l'utilisateur, d'un message vocal, relatif à la diffusion et/ou la réception et/ou la lecture du message.

Des données de destinataires du message et/ou de message(s) peuvent être mémorisées, le dispositif pouvant offrir, en fonction de la réponse à la demande vocale de confirmation, de sélectionner au moins un destinataire et, éventuellement, un message parmi les destinataires mémorisés.

L'invention concerne également un dispositif d'aide à l'assistance comportant :
- un ou plusieurs capteurs d'un phénomène
ou d'un paramètre physique, et
- des moyens pour recevoir un signal de chaque capteur et envoyer une instruction d'appel vers un dispositif téléphonique ou communiquant, fixe ou portable, ou pour envoyer un appel vers un destinataire
ou vers un serveur vocal.

Un tel dispositif est de préférence portable par un utilisateur.

Chaque capteur peut être par exemple un contacteur tactile ou un capteur de position (par exemple un capteur d'inclinaison d'une partie du corps de l'utilisateur) ou un capteur d'une donnée dynamique ou cinématique de l'utilisateur, par exemple un capteur d'accélération ou de vitesse, ou un capteur d'un signal vocal d'un utilisateur ou d'un signal physiologique d'un utilisateur, par exemple d'un signal de détection des battements de coeur, ou d'un pouls, ou d'un rythme respiratoire.

Chaque capteur peut en outre comporter des moyens pour envoyer lui-même, une instruction d'appel directement vers un dispositif téléphonique, fixe ou portable.

Une information relative au capteur dont un signal a été reçu est de préférence également envoyée.

Les moyens pour recevoir un signal peuvent comporter des moyens de reconnaissance vocale et/ou des moyens pour envoyer une demande de confirmation.

Globalement, l'invention peut mettre en oeuvre des moyens ou systèmes d'analyse de situation anormale, des accessoires vestimentaires communicants, des plates-formes vocales, des systèmes de multi-diffusion, des plates-formes Web et des systèmes de communications.

### BREVE DESCRIPTION DES FIGURES

- Les figures 1A - 1C représentent divers dispositifs d'aide ou d'assistance pouvant équiper un utilisateur.
- La figure 2 représente un mode de réalisation d'un système d'assistance selon l'invention.
- La figure 3 représente un mode de réalisation d'un procédé de traitement d'appels selon l'invention.

### EXPOSÉ DÉTAILLÉ DE MODES DE RÉALISATION DE L'INVENTION

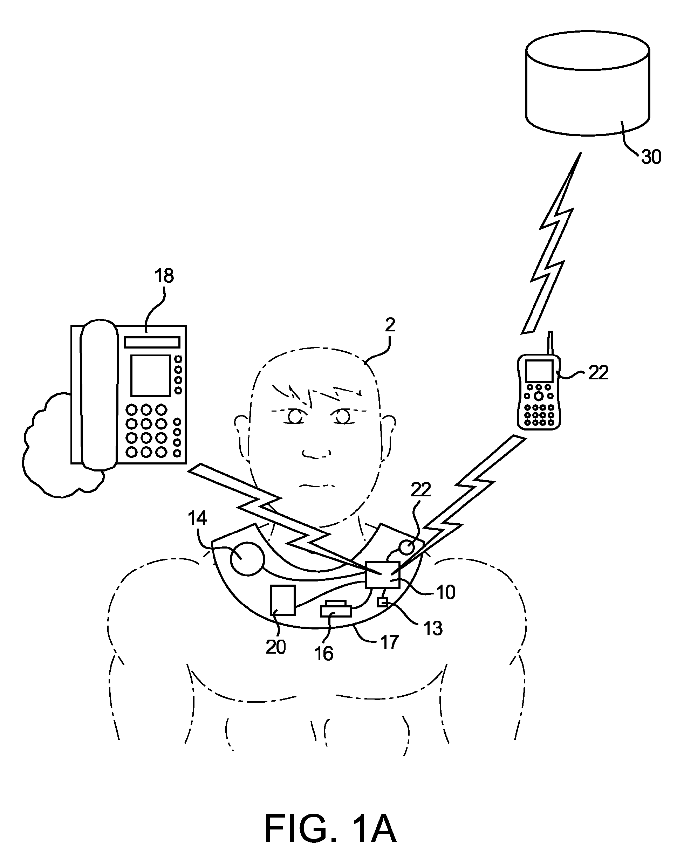

Un premier mode de réalisation d'un dispositif d'aide ou d'assistance est illustré en figure 1A.

Un utilisateur 2 est muni d'un microphone 12, et d'un haut-parleur et/ou d'un ou de plusieurs capteurs 20, et/ou d'un ou de plusieurs contacteurs tactiles 16.

Il est également muni de moyens électroniques 10, dit moyens de gestion, par exemple contenus dans un boîtier.

Ces moyens peuvent comporter des moyens de mémorisation, qui peuvent éventuellement mémoriser une liste de numéros de téléphone préenregistrés.

Selon un exemple de réalisation, ces moyens 10 comportent un microcontrôleur ou un microprocesseur programmé pour, sur réception d'un signal en provenance du microphone 12, ou de l'un au moins des capteurs 20 ou de l'un au moins des contacteurs tactiles 16, transformer ce signal en une information de commande pour faire composer par l'un ou l'autre des appareils de téléphonie fixe ou mobile 18, 22, qui sont à disposition de l'utilisateur 2, un numéro d'appel, par exemple le numéro d'un serveur distant 30 ou d'une plate-forme d'assistance 30 distante. Un appareil à disposition de l'utilisateur peut aussi être un appareil communiquant, par exemple un microordinateur équipé de moyens de reconnaissance vocale et de moyens pour établir une liaison ou une communication avec un appareil ou un serveur distant 30 et diffuser à l'utilisateur des informations, sous forme vocale ou visuelle, en provenance de cet appareil distant ou de ce serveur distant.

Selon un exemple de réalisation non limitatif, les moyens 10 transforment le signal reçu d'un capteur 20 ou d'un contacteur tactile 16 en un signal sonore, qui va activer une fonction de génération d'une instruction d'appel d'un numéro, par un des appareils 18, 22.

L'instruction d'appel est par exemple transmise par un câble ou encore par voie ou liaison radio sans fil, notamment de type « bluetooth » ou wifi ou par infra-rouge.

Les moyens 10 peuvent aussi être munis de moyens, par exemple de type logiciel, de reconnaissance vocale, ce qui leur permet de détecter tout signal vocal en provenance de l'utilisateur lui-même, signal qui permet lui aussi d'activer la fonction de génération d'une instruction d'appel à l'un ou l'autre des appareils 18, 22, transmise également par liaison filaire ou par voie sans fil.

La transmission de l'information de commande permet ensuite la composition d'un numéro préenregistré puis l'établissement d'une liaison audio, et enfin la transmission de données.

L'information est transmise à l'un des appareils 18, 20 avec un code, par exemple de type DTMF, identifiant la source du signal : s'agit-il d'un signal provenant de tel ou tel capteur 20 ou de tel ou tel contacteur 16 ou d'un appel vocal de l'utilisateur lui-même ? De préférence, cette information va en outre permettre une mise en fonctionnement de l'appareil communiquant ou de téléphonie 18, 20 concerné en mode « main libre ».

Les moyens 10 de gestion permettent donc de recueillir les signaux contenant des signaux et des informations provenant du microphone 12, et/ou d'un ou plusieurs contacteurs tactiles 16 et/ou d'un ou plusieurs capteurs 20, d'analyser ces signaux et leur origine et de les transformer en une instruction de mise en communication vers les moyens communiquants ou téléphoniques 18, 22. On notera que, dans certaines situations, plusieurs capteurs peuvent être activés simultanément. Dans certains cas, une instruction de commande pour faire composer un numéro d'appel ne sera générée que si deux capteurs envoient un signal.

Les moyens 10 peuvent éventuellement offrir à l'utilisateur de choisir l'un des numéros préenregistrés et d'établir une communication téléphonique vers le numéro choisi. Par exemple, les moyens 10 retournent à l'utilisateur, par un haut-parleur 13, un message tel que : *« quel numéro souhaitez vous composer ? »*

Une fois une communication établie, un dialogue vocal peut avoir lieu avec un interlocuteur, l'utilisateur 2 parlant dans un microphone 12 et écoutant par le haut-parleur. Selon un autre mode de réalisation un dialogue non vocal a lieu par l'intermédiaire d'un moyen de visualisation, par exemple un écran associé à l'un ou l'autre des appareils communiquants 18, 22. Les deux modes de dialogue peuvent être mis en oeuvre, séparément ou en combinaison.

Un numéro ou une liste de numéros peut être sélectionné/ée par défaut, par exemple pour le cas où l'utilisateur 2 serait inconscient, du fait d'un malaise, ou pour le cas où il ne pourrait pas s'exprimer de manière audible. Dans ce cas, le signal aura le plus souvent été émis par l'un des capteurs 20 ou par un des contacteurs 16.

Une source d'énergie permettant l'alimentation de ce système communicant peut être incluse dans les moyens 10.

Ces moyens 10 peuvent être paramétrables. Par exemple, ils offrent le choix à l'utilisateur de déclencher un appel ou un signal d'alerte vers un numéro ou un destinataire donné, en fonction du mode de déclenchement. Celui-ci peut être :
- à commande manuelle, les contacteurs tactiles 16 pouvant être actionnés suivant différentes séquences de pression (voir exemples donnés dans le tableau I ci-dessous),
- et/ou à commande vocale, par le microphone 12 et par des moyens de reconnaissance vocale inclus dans le boîtier 10,
- et/ou à commande automatique, ladite commande provenant des capteurs 20 (ex : accéléromètres, magnétomètres...), par exemple lorsque l'intensité des signaux provenant de ces capteurs dépassent un certain seuil et sont alors anormaux.

Les moyens 10 peuvent aussi avoir la possibilité de « demander » à l'utilisateur une confirmation avant de déclencher effectivement l'alerte, confirmation qui se fait par reconnaissance vocale ou action sur les contacteurs tactiles. En cas d'absence de confirmation, après une certaine durée, du fait par exemple d'un état inconscient de l'utilisateur, il y a déclenchement automatique de l'alerte.

On notera que tous les modes de déclenchement peuvent conduire à la numérotation d'un unique numéro de téléphone ou à l'envoi d'un message vers un unique destinataire.

Dans le cas d'appareils 18, 22 de téléphonie, l'appel peut être déclenché soit via le téléphone fixe 18, soit via le téléphone mobile 22. Le choix entre ces deux terminaux est fonction du paramétrage du boîtier électronique 10 de gestion. Ce paramétrage peut être par exemple fonction du coût de la communication téléphonique, ou encore de la localisation. Selon un exemple, le boîtier électronique tente de contacter en premier le téléphone fixe, puis, dans un deuxième temps, le téléphone mobile si le téléphone fixe n'est pas relié au boîtier (ex : hors de portée de la liaison radio).

Dans le cas d'une communication ou d'une transmission par un système de téléphonie mobile, le boîtier 10 peut soit être relié à un téléphone mobile 22, soit directement connecté à un module télécom GSM, GPRS ou UMTS intégré au système par exemple.

Le tableau I ci-dessous donne un exemple de paramétrage des moyens 10.

Dans cet exemple, le premier numéro d'appel est déclenché par signal en provenance d'un capteur parmi 3 capteurs 20, ou par un appui court sur un contacteur 16 ou par un signal vocal « alerte ».

Le deuxième numéro d'appel sera déclenché par l'un des capteurs 20, mais seulement en cas de confirmation positive, ou par deux appuis courts successifs sur le contacteur, ou par un appel vocal « médecin ».

Le troisième numéro d'appel sera déclenché uniquement en cas d'un appui long sur le contacteur, ou sur appel vocal « famille ».

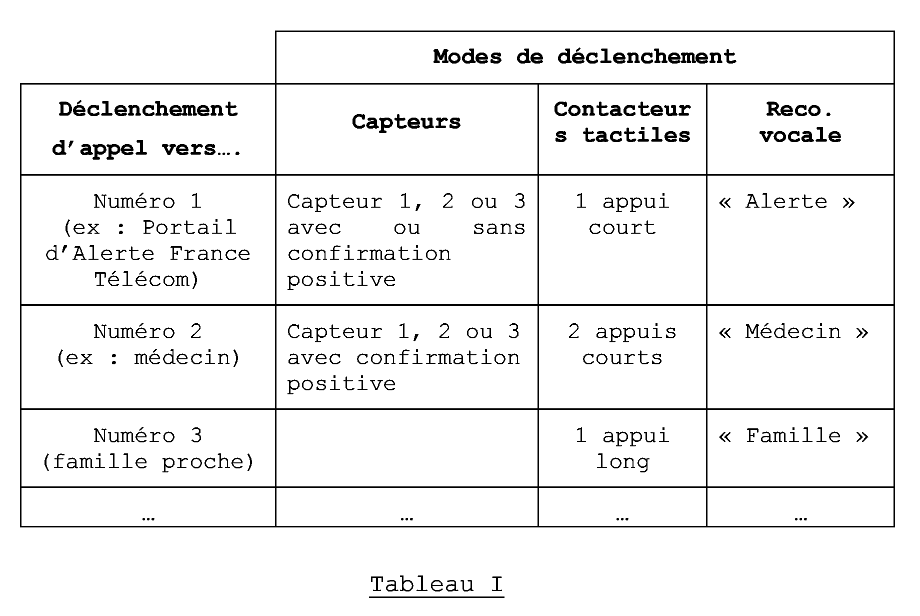

L'invention propose donc d'abord un dispositif (capteurs 20,...), éventuellement portable, qui offre de nouvelles possibilités à un utilisateur 2.

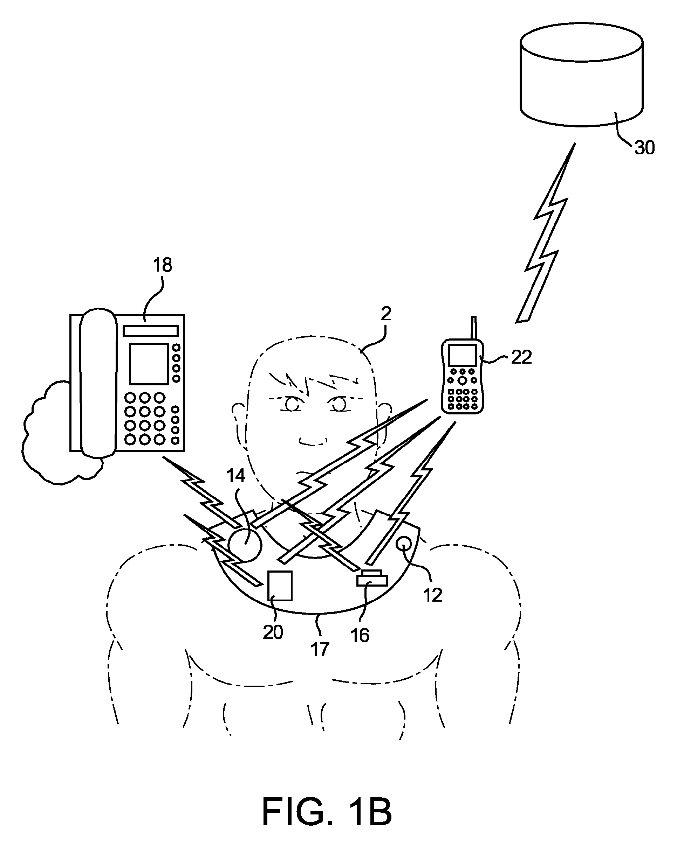

Selon un autre mode de réalisation (figure 1B), les moyens 10, ou leurs fonctions, peuvent être intégrés dans l'un des terminaux communiquants ou téléphoniques 18, 20.

Dans ce cas chaque capteur ou détecteur 20 ou contacteur 16 est muni de moyens pour transmettre directement à l'un de ces terminaux un signal d'activation ou de commande pour leur faire composer un numéro d'appel, par exemple le numéro d'une plate-forme d'assistance 30. Le signal d'activation est accompagné d'un code ou d'une information identifiant le capteur ou le contacteur qui l'a émis.

Par exemple, chaque capteur ou détecteur ou contacteur est muni de moyens pour transmettre aux terminaux communiquants de l'utilisateur un signal par un câble ou encore par voie ou liaison radio sans fil, notamment de type « bluetooth ».

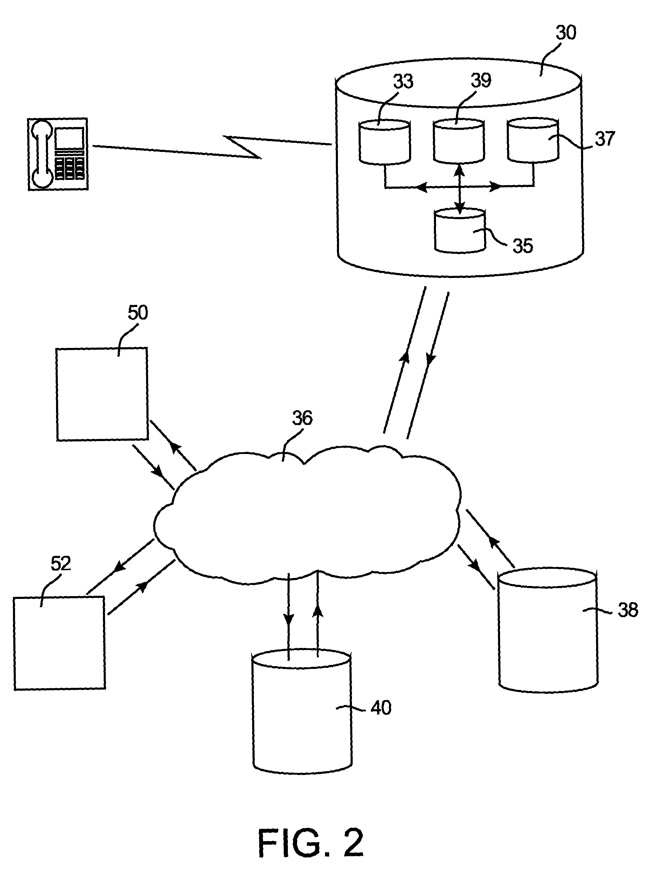

Pour la reconnaissance d'un appel vocal de l'utilisateur, les moyens 18, 22 peuvent être munis d'une fonction de reconnaissance vocale. L'utilisateur peut alors lancer une instruction ou un signal vocal, par exemple par son microphone, commandant la mise en relation téléphonique avec une plate-forme ou un serveur d'assistance 30 (figure 2).

Quelle que soit la source du l'instruction de mise en relation, des données ou des informations peuvent ensuite être échangées, soit en mode vocal, soit en mode non vocal par l'intermédiaire d'un moyen de visualisation, par exemple un écran associé à l'un ou l'autre des appareils communiquant 18, 22. Les deux modes de dialogue peuvent être mis en oeuvre, séparément ou en combinaison.

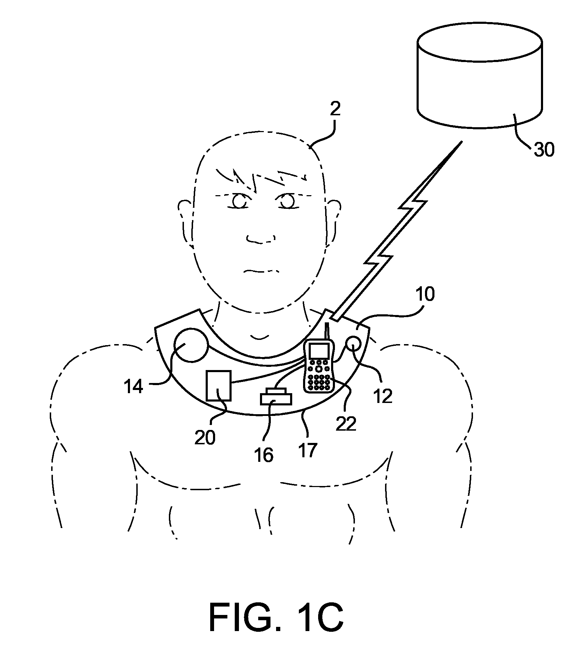

Selon encore un autre mode de réalisation, un téléphone portable, ou ses composants essentiels, peuvent être intégrés dans l'équipement de l'utilisateur (figure 1C). Dans ce cas, les capteurs et contacteurs envoient des signaux directement à cet appareil portable ou à ses composants. Eventuellement, l'appareil téléphonique portable peut être muni de moyens de reconnaissance vocale et être activé de manière vocale par l'utilisateur. Un dialogue ou un échange d'informations peut avoir lieu directement avec une plate-forme ou un serveur d'assistance 30 (figure 2).

Les autres fonctions déjà décrites ci-dessus peuvent être également mises en oeuvre dans le cadre de ces deux modes de réalisation : sélection de numéro d'appel ou d'une liste de numéros d'appel, et/ou possibilité de paramétrage, par exemple à commande manuelle et/ou vocale et/ou automatique comme décrit ci-dessus, et/ou envoi à l'utilisateur d'une demande de confirmation et, éventuellement, déclenchement automatique de l'alerte si pas de confirmation.

Le fait de pouvoir disposer d'un système portable offre de nombreux avantages. En particulier, un haut-parleur ainsi que le microphone 12 peuvent être à portée directe de la bouche et des oreilles de l'utilisateur 2.

Les capteurs 20 peuvent être placés directement près du corps, et offrir des informations riches sur l'état physique de l'utilisateur, par exemple sur une activité ou physique détectable aisément, et/ou sur une position d'une partie du corps de l'utilisateur, et/ou sur sa dynamique et/ou sa cinématique, et/ou sur son état physiologique, par exemple ses battements de coeur, et/ou son pouls, et/ou son rythme respiratoire... etc.,

Le microphone, le haut-parleur, les capteurs et les contacteurs tactiles peuvent être répartis en un ou plusieurs endroits au contact direct ou indirect de la personne. Ils peuvent par exemple être situés sur un fauteuil roulant. Ils peuvent être reliés au boîtier électronique 10 de gestion ou à l'un des appareils téléphoniques 18, 22 de manière « filaire » ou en liaison radio ou infra-rouge. L' ensemble peut être assemblé sur un collier 17 portable (figure 1) ou être intégré dans un vêtement communiquant du type décrit dans l'un des documents FR - 02 01757 ou FR - 01 16029.

Enfin, un tel système ne gêne pas les mouvements quotidiens de l'utilisateur et reste en place en cas de chute.

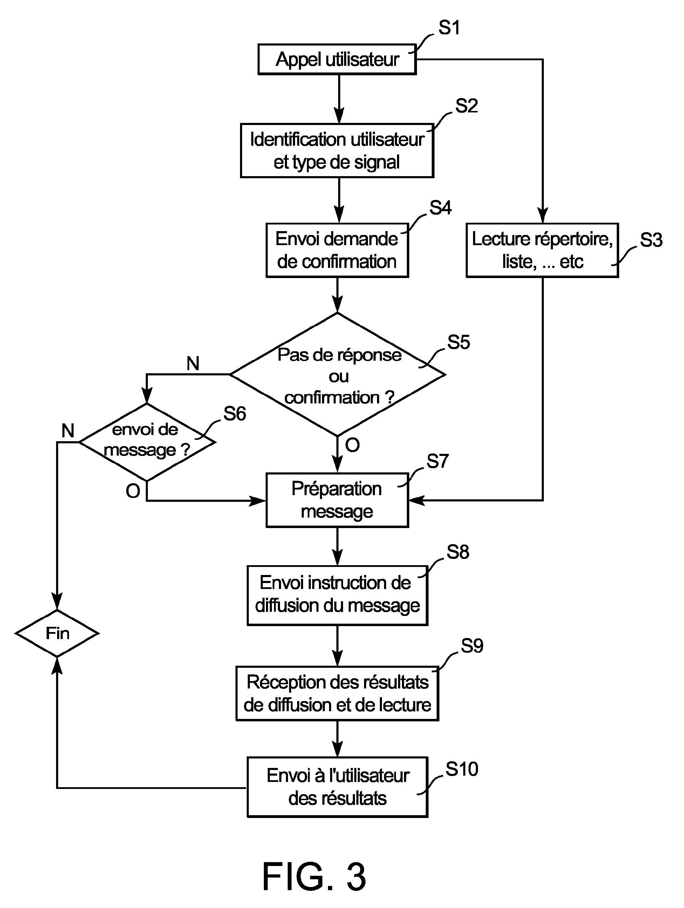

Un système d'assistance à un utilisateur 2 va maintenant être décrit en liaison avec les figures 2 et 3.

Comme illustré sur la figure 2, celui des moyens communiquants ou de communication téléphonique 18, 22 qui est sollicité envoie un message, pas nécessairement vocal, vers une plate-forme vocale ou un serveur vocal 30 (figure 3 : étape S1). Comme déjà indiqué ci-dessus, ce message ou cette information va en particulier contenir une information sur le dispositif qui l'a émis (capteur 20, ou contacteur 16 ou message vocal de l'utilisateur).

Ce serveur vocal peut mettre en oeuvre des moyens de reconnaissance vocale, (langage naturel, grammaire DTMF), ainsi que des moyens de synthèse vocale et un interpréteur VXML.

Cette plate-forme ou ce serveur vont permettre de traiter un signal ou un appel de la part d'un utilisateur 2 en difficulté et, si nécessaire, d'organiser la diffusion de l'information vers un ou plusieurs destinataires 50, 52 qui pourront intervenir pour aider l'utilisateur en difficulté.

Le serveur 30 va tout d'abord (étape S2) identifier de quel utilisateur 2 provient l'appel ou le message, et quel(s) est le type de signal reçu : s'agit-il d'un appel traduisant un changement d'état d'un ou de plusieurs capteurs 20 (et, si oui, de quel(s) capteur(s) et avec quelle(s) intensité(s)), ou s'agit-il d'un signal vocal envoyé par l'utilisateur lui-même, ou s'agit-il d'un signal provenant d'un contacteur tactile 16 ?

Dans les deux derniers cas, la situation est moins grave que dans le premier cas : le message vocal ou l'activation d'un contacteur tactile témoignent d'une relative conscience de la part de l'utilisateur. Dans le premier cas, par contre, il va être vérifié quel capteur a envoyé un signal, et avec quelle intensité. En fonction de ces diverses informations, il pourra être affecté un degré d'urgence ou de gravité plus ou moins important à la situation.

Le serveur va donc recueillir des informations transmises par les moyens communiquants, par exemple de type téléphoniques 18, 22, de l'utilisateur 3, par exemple via une séquence de codes DTMF ou un flux de données SMS, http ou autre.

L'identification de l'utilisateur appelant 2 permet (étape S3) d'identifier, par exemple dans une base de données 33, son « profil », dont une liste de numéros à appeler en cas d'urgence ou sur demande expresse de l'utilisateur. Un mode de réalisation de ce profil est décrit plus loin.

Cette liste ou cette base de donnée peut être hébergée sur le serveur 30 ou sur un deuxième serveur 38, pas nécessairement muni des mêmes fonctions de reconnaissance vocale que le serveur 30. Dans ce deuxième cas, le serveur 30 va adresser une requête au serveur 38, lui demandant de lui adresser les informations ou les données de la liste en relation avec un utilisateur déterminé. Le serveur sur lequel cette base de données sera hébergée sera muni de moyens de recherche pour rechercher dans cette liste ou dans cette base de données.

Le serveur 30 va pouvoir formuler une ou des questions ou des demandes d'informations à l'utilisateur 2.

La fonction de synthèse vocale du serveur va traduire vocalement ces questions et demandes d'informations, les réponses obtenues permettant le déroulement de la logique du service d'assistance. Cette étape permet donc aux moyens 30 de recueillir les éléments pour analyser la situation et agir en conséquence.

Le serveur 30 va notamment envoyer (étape S4) à l'utilisateur 2 une demande de confirmation de la nécessité d'une intervention ou de la nécessité d'envoyer un message d'alerte à certains destinataires.

Si le serveur n'obtient pas de réponse à sa question, la situation peut être grave, et il y aura effectivement envoi du message d'alerte, ainsi que décrit ci-dessous.

Il en va de même lorsque le serveur reçoit une réponse de l'utilisateur confirmant l'urgence (étape S5, réponse « O »). Dans ce cas il peut être proposé à l'utilisateur de choisir un ou plusieurs destinataires d'un message, ainsi que de définir le contenu de ce message. Sinon ce choix sera effectué par le serveur 30 en fonction des données dont il dispose, comme décrit ci-dessous.

Si la réponse reçue ne confirme pas que la situation nécessite une telle procédure d'alerte (étape S5, réponse « N »), le serveur peut proposer à l'utilisateur (étape S6), une mise en relation téléphonique, directement avec un destinataire 50, 52 qu'il choisira dans la liste ou le profil mémorisé, tous deux déjà évoqués ci-dessus. Mais l'envoi d'un signal d'alarme inutile aura été évité.

Le système selon l'invention permet donc un échange d'informations avec l'émetteur de l'alerte : le service d'alerte engage un dialogue avec l'émetteur afin de déduire le comportement à adopter.

La mise en oeuvre d'une alerte va commencer par la préparation d'un message (étape S7): tant le contenu du message que son ou ses destinataires vont être déterminés par les données de profil relatives à l'utilisateur et lues lors de l'étape S3 ci-dessus, ainsi que, éventuellement, par les données d'identification du signal obtenues lors de l'étape S2. L'utilisateur peut aussi avoir été préalablement interrogé, par exemple en cas de réponse positive à l'étape S5, non seulement sur la liste de destinataires, mais aussi sur le contenu du message à diffuser.

Si l'utilisateur n'a pas défini de message particulier, un contenu par défaut pourra être retenu, par exemple, *« aller chez M.X, il est en difficulté et a besoin d'assistance* ».

Une instruction ou une requête de diffusion de message va ensuite être transmise (étape S8), par le serveur 30, vers un système ou un serveur 40 de diffusion de requêtes. Les deux serveurs 30, 40 communiquent alors par exemple via le réseau Internet 36. Eventuellement, les fonctions de diffusion de message sont groupées avec les fonctions de reconnaissance et de synthèse vocale et avec les fonctions déjà décrites ci-dessus. Dans ce cas le serveur 30 envoie directement les messages d'alerte aux destinataires. En fait les serveurs 30 et 40 sont alors regroupés en un seul serveur.

L'instruction ou la requête de diffusion comporte le contenu du message tel que défini au cours de l'étape de préparation, ainsi que l'information relative à la liste des destinataires.

Un système 40 de multi diffusion pouvant être mis en oeuvre dans le cadre de la présente invention est par exemple du type décrit dans le document FR - 2 823 405 ou dans le document EP - 03 291 048. Ce système 40 va transmettre les données, relatives à l'alerte, vers la liste des personnes 50, 52 à prévenir, en leur demandant de renvoyer un signal de lecture lorsqu'elles auront pris connaissance du contenu du message. En fait, pour chaque destinataire, il adresse le message à l'un des appareils associés, dans la liste ou le profil de l'utilisateur 2, à ce destinataire. Ces appareils peuvent être par exemple un micro-ordinateur ou un téléphone mobile ou un téléphone fixe ou un fax. La transmission au destinataire peut donc avoir lieu via le réseau Internet 36, ou via une passerelle permettant de relier l'Internet à, par exemple, un réseau hertzien de téléphonie mobile ou encore permettant de relier l'Internet à un réseau commuté de téléphonie fixe.

Le système de diffusion 40 va pouvoir fournir au serveur 30 des données relatives au traitement de la demande de diffusion (étape S9), c'est-à-dire des données relatives à la diffusion, et/ou à la réception et/ou à la lecture, du message.

Les moyens 30 peuvent donc recevoir des signaux ou des rapports de diffusion et/ou de réception et/ou de lecture, par les destinataires, des messages envoyés.

Selon une variante, le serveur 30 peut aller directement chercher ces informations dans le serveur de diffusion de messages.

Une analyse de l'avancement de la diffusion et une information dynamique relative à cet avancement peut donc être envoyée à l'émetteur de l'alerte, l'utilisateur 2 en difficulté (étape S10) ; et ce, de préférence sous forme vocale, grâce aux fonctions de synthèse vocale du serveur 30. Ceci va permettre de rassurer l'utilisateur en difficulté, et contribue donc à sa sécurité, et de le faire patienter jusqu'à l'arrivée d'une des personnes appelées.

Lorsqu'une des personnes appelées intervient (elle prend la décision d'aller aider l'appelant 2) elle va en informer le serveur 40.

Celui-ci va d'une part informer les autres destinataires 50, 52, mais aussi le serveur 30, de l'intervention de l'un d'entre eux. Le serveur 30 peut, à son tour, informer l'utilisateur 2 (« *M.Y. est en route vers vous, il devrait arriver prochainement* »), de préférence par message vocal.

Le serveur 40 va également assurer la diffusion, vers les personnes prévenues 50, 52, des données relatives à la fin de l'alerte.

Le traitement d'alerte ou de fin d'alerte conduit donc à une réservation, puis à une libération d'un ensemble de ressources.

Il peut donc y avoir construction dynamique de messages d'alertes, d'information sur l'alerte et de fin d'alerte adaptés au contexte.

Il peut aussi y avoir information de la liste des personnes 50, 52 à prévenir via le système 40 de multi diffusion. Cette liste est déduite d'un profil de l'utilisateur du service et des données qu'il a renseignées dans le système de paramétrage du service (ce renseignement pouvant être effectué sur un site Web par exemple).

Le système permet donc de récupérer les données contextuelles de l'alerte, d'assurer une phase de validation pour éviter au maximum les fausses alertes, de construire des messages d'alerte appropriés au contexte de l'alerte, et de sécuriser l'émetteur en le tenant informé de l'état de la prise en compte de sa demande d'assistance.

L'utilisateur du service peut accéder, par exemple par un site Web ou par appel téléphonique à un centre d'assistance, aux données mémorisées qui lui sont associées (son « profil »). Il peut notamment gérer ou modifier ces données, relatives à la façon dont il souhaite utiliser le service, par exemple les données de profil de l'utilisateur, et/ou les données relatives à la liste et aux coordonnées des personnes à prévenir, et/ou les données relatives à des messages d'alerte personnalisés et/ou à des messages préenregistrés personnalisés en fonction de leur destinataire, et/ou les données relatives aux liens entre les messages d'alerte et les destinataires.

De préférence les données mémorisées comportent une liste générale, ou un répertoire, de destinataires, comportant, pour chaque destinataire, son nom, et l'indication de un ou plusieurs moyens de communication (téléphone fixe ou mobile, fax, messagerie électronique, etc.) avec les numéros ou adresses correspondant (numéros de téléphone, de fax, adresse électronique, etc.).

A partir de cette liste générale, l'utilisateur peut bâtir une ou plusieurs listes spécifiques, en sélectionnant par exemple une ou plusieurs personnes à alerter en cas de difficulté majeure (liste 1), une ou plusieurs personnes à alerter en cas de difficulté mineure (liste 2), une ou plusieurs personnes à alerter en cas de déclenchement de tel ou tel type de capteur 16, 20. Ces listes pourront être adaptées par l'utilisateur 2 en fonction des circonstances : par exemple, lorsqu'un destinataire a prévu une absence, il est remplacé par un autre destinataire pendant toute sa période d'absence.

Des messages personnalisés peuvent être prévus dans certains cas particuliers. Par exemple, au cas où un capteur monté sur un fauteuil roulant signale un blocage du fauteuil, il peut être prévu de contacter une ou plusieurs personnes d'une des listes de destinataires, et de leur envoyer le message prédéfini : *» mon fauteuil s'est bloqué, peux tu venir m'aider à le débloquer ?* ».

Des stratégies d'appel peuvent être également mémorisées : si une personne confirme, en réponse au serveur, qu'elle n'est pas en difficulté majeure, elle peut cependant souhaiter qu'un certain destinataire soit prévenu automatiquement.

L'identification initiale du profil de l'appelant permettra de consulter toutes ces informations et de mettre en oeuvre la stratégie de communication adéquate, en fonction de l'utilisateur et des données mémorisées dans son profil, mais aussi en fonction du type de signal reçu par le serveur (le signal provient-il d'un capteur 20 ? ou d'un contacteur 16 ?).

L'invention peut donc mettre en oeuvre des téléphones fixes et/ou mobiles, des capteurs de détection, et/ou des accessoires portables communicants, tels que des accessoires vestimentaires communicants, une plate-forme vocale et/ou une plate-forme de multi diffusion ou plate-forme Web.

La plate-forme ou le serveur 30 mentionné ci-dessus met en oeuvre des moyens de mémorisation 33 des données (le « profil ») relatives à chaque utilisateur. En variante, ces données sont mémorisées dans les moyens de mémorisation d'un autre serveur 38. Schématiquement, le serveur 30 comporte également divers composants, tels qu'un microprocesseur 35 relié, par un bus, à un ensemble de mémoires RAM 37 pour stocker des données, et de mémoires ROM 39 dans lesquelles des instructions de programme peuvent être mémorisées. Ce système comporte en outre un dispositif de visualisation (non représenté sur la figure 2), ou écran, et des moyens périphériques tels qu'un clavier et une souris. Il peut en outre comporter des moyens d'interface avec le réseau 36, de type modem. Les autres appareils ou serveurs 38, 40, peuvent avoir la même constitution.

Chaque destinataire 50, 52 peut comporter un appareil tel qu'un ordinateur personnel, comportant des moyens similaires, même si de capacités inférieures à celles des serveurs. Mais un ou plusieurs destinataires peuvent être équipés, non pas d'ordinateurs, mais de téléphones mobiles ou fixes ou de fax. Les constitutions de ces divers appareils sont connues.

Dans une des zones mémoires du serveur 30 sont mémorisées les données ou instructions de programme pour mettre en oeuvre un procédé de reconnaissance et de synthèse vocale et pour mettre en oeuvre un procédé selon l'invention et tel que décrit ci-dessus, et notamment pour, en fonction de données reçues de l'utilisateur appelant 2, en particulier en réponse à la demande de confirmation émise par le serveur 30, déterminer les destinataires à avertir et avec quel type de message.

Sont également mémorisées les données ou instructions de programme pour recevoir, directement des utilisateurs 50, 52, ou du serveur 40, des données de suivi d'alerte, des messages relatifs à l'évolution de cette alerte (lecture du message par les destinataires, intervention de l'un d'entre eux)

Sont également mémorisées les données ou instructions de programme pour mettre en oeuvre un procédé tel que décrit ci-dessus, par exemple en liaison avec la figure 3.

Ces données ou instructions peuvent être transférées dans une zone mémoire du serveur à partir d'une disquette ou de tout autre support pouvant être lu par un micro-ordinateur ou un ordinateur (par exemple: disque dur, mémoire morte ROM, mémoire vive dynamique DRAM ou tout autre type de mémoire RAM, disque optique compact, élément de stockage magnétique ou optique).

Le serveur 40 présente une structure analogue, et est programmé pour, sur requête du serveur 30, mettre en oeuvre un procédé d'envoi de données d'alerte vers un ou plusieurs destinataires, recevoir de ceux-ci des messages de lecture et d'intervention, et les transmettre au serveur 30.

Un serveur tel que le serveur 38 peut par ailleurs être programmé pour retrouver un profil correspondant à chaque utilisateur 2 et fournir les données correspondantes au serveur 30, sur requête de celui-ci.

Un exemple d'application va être donné.

Une personne cardiaque, qui a déjà eu deux malaises cardiaques, souhaite pouvoir pêcher seule, dans un endroit connu d'elle seule. Elle s'équipe du système de génération d'alerte qui, dans son cas, comprend : un détecteur de rythme cardiaque et un système de communication téléphonique main libre.

Par mesure de sécurité elle a défini deux listes d'alerte, l'une en cas d'inconscience et l'autre correspond à un niveau de danger plus faible. Elle part. Après son départ, son capteur détecte une forte anomalie. Cette anomalie est transmise via le téléphone portable de la personne au serveur vocal 30, de la manière décrite ci-dessus.

Le système 30 lui pose une question pour s'enquérir de son état, par exemple « est-ce que tout va bien ? ». Si la personne ne répond pas, l'alerte est considérée de niveau 1 et un message d'alerte est envoyé à toute les personnes de la liste 1.

Si la personne répond « non ça ne va pas », le système lui demande si elle souhaite appeler la liste 1 ou la liste 2. Un message d'alerte est envoyé à toutes les personnes de la liste nommée.

Mais si la personne ne peut répondre à cette deuxième question, alors à nouveau l'alerte est considérée de niveau 1 et un message d'alerte est envoyé à toutes les personnes de liste 1.

Si la personne répond « oui ça va », le système lui demande si elle souhaite appeler quelqu'un de son carnet personnel, mais il n'y a pas d'envoi d'alerte.

La personne émettrice de l'alerte est informée des personnes de la liste qui ont pris connaissance du message d'alerte. Elle est ainsi rassurée par le simple fait de savoir que quelqu'un a pris son alerte en compte.

Elle peut, si elle le souhaite et si elle le peut physiquement, appeler l'une des personnes qui a reçu son message.

L'alerte sera clôturée par l'émetteur ou une personne venue en secours. Les autres personnes de la liste d'alerte en seront tenues informées.

Cette même personne peut aussi déclencher de manière volontaire l'alerte soit vocalement, soit par pression sur un contacteur 16.

## Revendications

1. Procédé de traitement, par un serveur vocal (30), d'un signal d'appel provenant d'un appareil communiquant (2), dit appareil appelant, comportant :
- l'envoi d'une demande vocale de confirmation à cet appareil appelant ou à un utilisateur de cet appareil,
- sur confirmation, ou sur absence de réponse à une demande de confirmation, envoi d'un message vers au moins un destinataire d'une liste de destinataires (50, 52).

2. Procédé selon la revendication 1, comportant en outre, dans le cas où il n'y a ni absence de réponse à une demande de confirmation, ni confirmation, envoi à l'appareil appelant, ou à un utilisateur de cet appareil, d'une demande de requête de mise en relation avec un destinataire.

3. Procédé selon l'une des revendications 1 ou 2, comportant en outre, après envoi du message, l'envoi à l'appareil appelant ou à un utilisateur de cet appareil, d'un message, relatif à la diffusion et/ou à la réception et/ou à la lecture du message.

4. Procédé selon l'une des revendications 1 à 3, comportant en outre la mémorisation de données de destinataires du message et éventuellement des données d'au moins un message à envoyer à au moins un destinataire.

5. Procédé selon la revendication 4, comportant en outre, en fonction de la réponse à la demande de confirmation, et/ou d'une identification du signal reçu par le serveur, une étape de sélection de destinataires parmi les destinataires mémorisés et, éventuellement, d'un message à envoyer.

6. Dispositif (30) de traitement d'un signal provenant d'un appareil communiquant (18, 22), dit appareil appelant, comportant :
- des moyens (33, 35, 37, 39) pour envoyer une demande de confirmation à cet appareil appelant ou à un utilisateur (2) de cet appareil appelant,
- des moyens (33, 35, 37, 39) pour envoyer, sur confirmation, ou sur absence de réponse à une demande de confirmation, une requête de diffusion de message vers une liste de destinataires.

7. Dispositif selon la revendication 6, comportant, en outre, des moyens pour envoyer, à l'appareil appelant ou à son utilisateur, une demande de requête de mise en relation avec un destinataire, dans le cas où il n'y a ni absence de réponse à une demande de confirmation, ni confirmation.

8. Dispositif selon l'une des revendications 6 ou 7, comportant en outre des moyens pour rechercher ou recevoir, après envoi d'une requête de diffusion, des informations relatives à la diffusion et/ou à la réception et/ou à la lecture, par les destinataires, du message envoyé.

9. Dispositif selon l'une des revendications 6 à 8, comportant en outre des moyens pour, après envoi d'une requête de diffusion, envoyer à l'appareil appelant, ou à un utilisateur de cet appareil, un message, par exemple vocal ou visuel, relatif à la diffusion et/ou à la réception et/ou à la lecture du message.

10. Dispositif selon l'une des revendications 6 à 9, comportant en outre des moyens (38, 33) pour mémoriser des données de destinataires du message, et éventuellement des données relatives au contenu d'un ou plusieurs messages à envoyer, et des moyens pour, en fonction de la réponse à la demande de confirmation, sélectionner au moins un destinataire ou une liste de destinataires parmi les destinataires, et éventuellement un message à envoyer.

11. Système de traitement d'un signal, comportant un dispositif selon l'une des revendications 6 à 10, et des moyens (40) de diffusion de messages vers des destinataires (50, 52).

12. Dispositif d'aide à l'assistance comportant :
- un ou plusieurs capteurs (12, 14, 16, 20) d'un ou plusieurs phénomènes ou paramètres physiques ou physiologiques d'un utilisateur du dispositif, et
- des moyens (10) pour recevoir un signal de chaque capteur et envoyer une instruction d'appel vers un dispositif communiquant (18, 22), fixe ou portable, ou pour envoyer un appel vers un destinataire ou vers un serveur vocal (30).

13. Dispositif selon la revendication 12, les moyens pour envoyer une instruction d'appel ou un appel permettant en outre d'envoyer une information relative au capteur dont un signal a été reçu.

14. Support de données, pouvant être lu par un système informatique, comportant les données, sous forme codée, pour mettre en oeuvre un procédé selon l'une des revendications 1 à 5.

15. Produit logiciel comportant un moyen de support de données de programme, susceptible d'être lu par un système informatique, permettant de mettre en oeuvre un procédé selon l'une des revendications 1 à 5.
